# EUROPEAN PATENT APPLICATION

(11) **EP 0 568 063 A2**
(43) Date of publication of application: **03.11.1993**
(21) Application number: 93106966.0
(22) Date of filing: 29.04.1993
(51) Int. Cl.: G11B 23/087

(54) **Ribbed molded cassette base**

(30) Priority: 01.05.1992 US 877487
(71) Applicant: MINNESOTA MINING AND MANUFACTURING COMPANY, St. Paul, Minnesota 55133-3427 (US)
(72) Inventor: Johanson, Bradley J., c/o Minnesota Mining and, St. Paul, Minnesota 55133-3427 (US)
(74) Representative: Hilleringmann, Jochen, Dipl.-Ing.

(57) **Abstract**

A molded videocassette base 10 having reduced wall thicknesses and ribs radiating from the gate 70, 72, 74, 76, 78, 80, 82, 84, 86, 88, 90, 92, 94, 96. Ribs 70, 72, 74, 76 are aligned with lines passing through the center of the supply reel spindle access hole 64 and the center of the take-up reel spindle access hole 66. The base 10 can also include a rib 90, 92, 94, 96 formed along the alignment groove on the outside of the base 10. Additional ribs 78, 80, 82, 84, 86, 88 extend to the left bridge 22 and right bridge 26 areas and along lines passing through the groove rib 90, 92, 94, 96.

## Description

### TECHNICAL FIELD

The present invention relates to molded parts. More particularly, the present invention relates to molded videocassette parts.

### BACKGROUND OF THE INVENTION

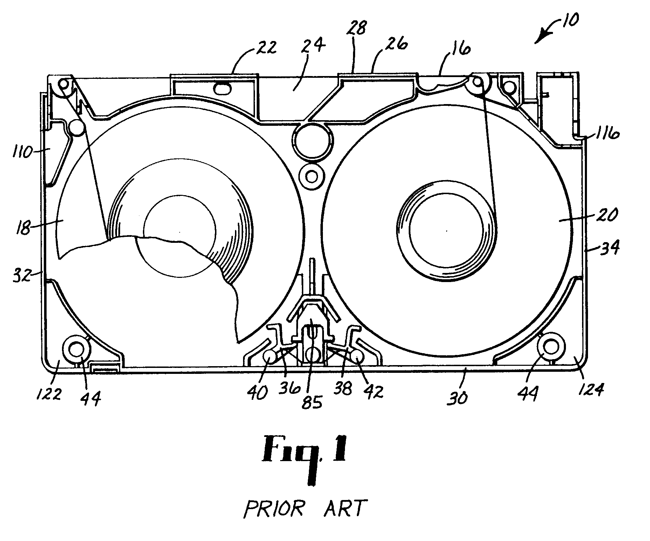

Cassettes for holding reels of magnetic recording tape are well-known, and videocassettes for home use are sold commercially in large volumes into a very price-competitive market. Videocassettes typically include a housing having a reel of magnetic recording tape called the supply reel and a take-up reel. One end of the tape on the supply reel is attached to the take-up reel. As shown in Figure 1, the housing typically includes a lower half, called the base 10, and an upper half, called the cover (not shown). A door (not shown), which protects the exposed length of tape 16 running between the supply reel 18 and the take-up reel 20 when the cassette is not in use, is attached to the cover. These cassettes operate in a videocassette recorder (VCR) which is capable of both playing and recording.

The tape 16 follows a prescribed path from the supply reel 18, over various tape guides, out of the housing, across a planar area called the left bridge 22, across an open area 24 where the tape 16 is unsupported, to a planar area called the right bridge 26, and back into the housing to the take-up reel 20. The long side of the cassette on which the bridges 22, 26 are located is the front 28 of the cassette, and the long side opposite the front side of the cassette is the rear 30 of the cassette.

The end of the cassette nearest the supply reel 18 is the left end 32 of the cassette, and the end of the cassette nearest the take-up reel 20 is the right end 34. These conventions are consistent with the manner in which a videocassette is typically inserted into the VCR; the front 28 of the cassette enters the machine first, with the base 10 on the bottom and the rear 30 of the cassette trailing.

Several other parts are also included in the cassette which enable the entire device to be safely and conveniently placed in a compatible machine for recording or playing. These parts include reel brakes 36, 38, which pivot on pins 40, 42, which typically are molded as part of the base 10. The reel brakes 36, 38 keep the reels 18, 20 from unrolling the tape 16 when the cassette is out the VCR. Other safety devices signal the VCR that the end of the tape 16 has been reached, thereby preventing damage to the recorded material.

The base 10 and cover fit together to enclose tape reels 18, 20, along with the other internal parts, to exclude contaminants and protect the tape 16 from damage. Alignment of the cover with the base 10 is assured by screw bosses 44 in the base 10 which mate with corresponding bosses in the cover.

A significant part of the cassette cost arises from the size and complexity of the base 10 and cover. Videocassette housings typically are injection molded using a synthetic resin such as polystyrene or acrylonitrile-butadiene-styrene (ABS). Molds for the base and cover are typically designed to pull apart vertically, with one half of the mold forming substantially all of the internal parts of the base or cover, and the other half forming the outside surfaces of the part. Since videocassette housings have large wall areas, reducing wall thickness is important to minimizing injection molding costs. Wall thickness contributes to part cost not only through the quantity of material used in the part, but also through the time required to cool the part before ejection from the mold. While material consumption is proportional to the first power of wall thickness, the cooling time required before a part can be ejected from a mold is more nearly proportional to the square of the wall thickness. Since cooling the part sufficiently to allow ejection without warping or other damage consumes about 80% of the total molding time, it is clear that reduction of wall thickness presents significant opportunities for increasing the productivity of the videocassette manufacturing process.

However, there are limits to how thin the walls of a videocassette housing can be made. Naturally, the walls must be of sufficient thickness to provide the physical strength and rigidity necessary for proper functioning of the cassette. In addition, dimensional requirements are placed upon the cassette by the need for compatibility with standard VCR'S. Videocassettes which are to be used in VHS systems have a guide groove in the exterior bottom wall 50 of the base 10, running the length of the cassette, which cooperates with certain parts in the machine to allow the cassette to be inserted correctly. This guide groove must be at least 1.25 mm deep. In conventional VHS cassettes, the bottom wall 50 is made sufficiently thick to accommodate the groove.

Another factor in determining wall thickness is resin flow during injection molding. During injection of the material into the mold, the various parts of the mold serve not only to determine the size and shape of the part being molded, but also act as passages through which the molten plastic must flow to reach other parts of the mold. If a wall section is too thin, the portion of the mold forming that wall section will be correspondingly thin, thereby restricting flow, and causing excessive reduction in injection pressure at points farther from the point of injection, or gate. As a result, the injection pressure may have to be lengthened, or both.

Increasing injection pressure can create undesirable side effects. U.S. Patent No. 4,706,149 describes the ejection difficulties which can arise when injection pressures are high. Additionally, polymeric materials which are forced to flow through very thin channels at the high shear rates produced by high injection pressures often undergo excessive orientation of the polymer chains, which can weaken the part and directionally vary shrink rates, which can, in turn, lead to warping.

U.S. Patent No. 4,706,149 addresses the problem of providing sufficient flow area in the wall portion above the bottom wall guide groove by providing a raised portion above the groove, as shown in Figure 6 of that patent. The '149 patent does not, however, mention thinning the wall of the cassette to save material or reduce cooling time. Also, the projection above the guide groove can interfere with the operation of the reels, absent some means of raising the reel above the projection. In U.S. Patent No. 4,706,149, elevated annular rings are added to the bottoms of the reel flanges to raise the reel above the projection. This method suffers from the disadvantage that the projection above the guide grooves cannot be continuous, since they must have breaks through which the annular rings on the bottoms of the reel flanges pass.

Providing reinforcing ribs extending from the surface of thin walls in injection molded parts is known. Japanese published patent application JP 276376 shows the use of ribs placed in a rectangular lattice configuration on the inside of a videocassette base to reinforce the bottom wall. Japanese published application JP 2-195583 discloses a similar use of ribs, but in a circular configuration, centered on the gate area. The use of a circular configuration with both radial and circumferential ribs is purported to provide improvements in the flow of the molding material.

Both JP 2-76376 and JP 2-195583 provide a dense network of ribs running orthogonally to each other. This presents a less than optimum flow pattern during molding, since the flowing molding material must change direction sharply to fill all of the ribs. Fill patterns which are unidirectional are preferred to improve orientation. Another problem which can arise from networks of criss-crossing rib patterns is that the molding material may flow along the ribs and surround the thin wall areas, without filling them, thereby blocking and preventing them from filling.

Another common problem which arises when ribbing is added to walls is the appearance of visible lines on the wall on the side opposite the ribs. These lines, called sink marks, can be of varying severity, ranging from a slight difference in surface texture to pronounced indentations in the surface. Even mild and seemingly harmless sink marks can, however, have the appearance of a severe defect in the surface. Sink marks can often be avoided by making the ribs narrower than the thickness of the wall. Sometimes, if the sink marks are not too severe, they can be hidden by surface texturing of the area where they are likely to appear. Also, adjustment of molding conditions, particularly injection pressures during various stages of the molding process, can sometimes reduce the incidence of sink marks to an acceptable level. However, this narrows the range in which the molding process can operate.

Since cassette bases and covers have sections having a variety of shapes and thicknesses, these various sections will require different times to cool during injection molding. The overall cooling time cooling time required for the part will be determined by the slowest cooling section, called the "critical section for cooling." Further, as the cooling time for some sections is shortened by thinning, it is possible that another section may become the critical section. Therefore, thinning of only the wall sections may not be sufficient to significantly shorten the overall cooling time for the part.

None of the known cassette components have a system of ribs for a thin-walled videocassette base which requires a reduced number of ribs and provides more unidirectional flow during injection molding, while providing suitable cassette dimensions, strengthening the thin cassette wall, and improving the flow of the molding material. In no known injection molded videocassette housings do the locations and configuration of the ribs enable them to combine the functions of improving material flow during injection molding and structurally reinforcing of the bottom wall of the cassette base.

### SUMMARY OF THE INVENTION

The present invention is a molded videocassette base having reduced wall thicknesses. The base includes a base lower wall having a circular supply reel spindle access hole and a circular take-up reel spindle access hole. Two opposing base side walls are perpendicular to the lower wall. A base front wall is perpendicular to the lower wall and the side walls, and the base front wall and the base side walls define front corner regions. A base rear wall opposes the front wall and is perpendicular to the lower wall and the side walls. Additionally, the videocassette includes left and right bridge areas in the base front wall. A gate through which the material forming the base is inserted into the mold is located in the base.

A raised annular bearing surface surrounds the supply reel spindle access hole and the take-up reel spindle access hole on the inner surface of the base lower wall.

A plurality of ribs are formed on the inside of the base and radiate from the gate generally unidirectionally to the front, rear, and side walls. First and second ribs extend along a line passing through the center of the supply reel spindle access hole. The first rib extends from the gate to the annular bearing surface of the supply reel spindle access hole and the second rib extends from the annular bearing surface of the supply reel spindle access hole to the side wall at the left front corner region. Third and fourth ribs extend along a line passing through the center of the take-up reel spindle access hole. The third rib extends from the gate to the annular bearing surface of the take-up reel spindle access hole and the fourth rib extends from the annular bearing surface of the take-up reel spindle access hole to the side wall at the right front corner region.

The videocassette can include a bottom wall guide groove on the outside of the base adjacent and parallel to the base rear wall and a groove rib formed on the inside of the base opposite the guide groove.

The videocassette base also includes fifth, sixth, seventh, eighth, ninth and tenth ribs. The fifth rib extends from the gate to the left bridge area and the sixth rib extends from the gate to the right bridge area. Preferably, the fifth rib extends to the left side of the left bridge area and the sixth rib extends to the right side of the right bridge area. The seventh and eighth ribs extend along a line passing through the groove rib with the seventh rib extending from the gate to the groove rib and the eighth rib extending from the groove rib to the left rear corner region. Ninth and tenth ribs also extend along a line passing through the groove rib with the ninth rib extending from the gate to the groove rib and the tenth rib extending from the groove rib to the right rear corner region. The groove rib is segmented into a plurality of rib parts by the seventh, eighth, ninth and tenth ribs.

### BRIEF DESCRIPTION OF THE DRAWINGS

Figure 1 is a plan view of the base of a known videocassette.

Figure 2 is a plan view of a base of a videocassette according to the present invention showing the flow of mold material.

Figure 3 is a cross-sectional view of the videocassette taken along line 3-3 of Figure 2.

Figure 4 is a plan view of a base of a videocassette according to another embodiment of the present invention.

### DETAILED DESCRIPTION OF PREFERRED EMBODIMENTS

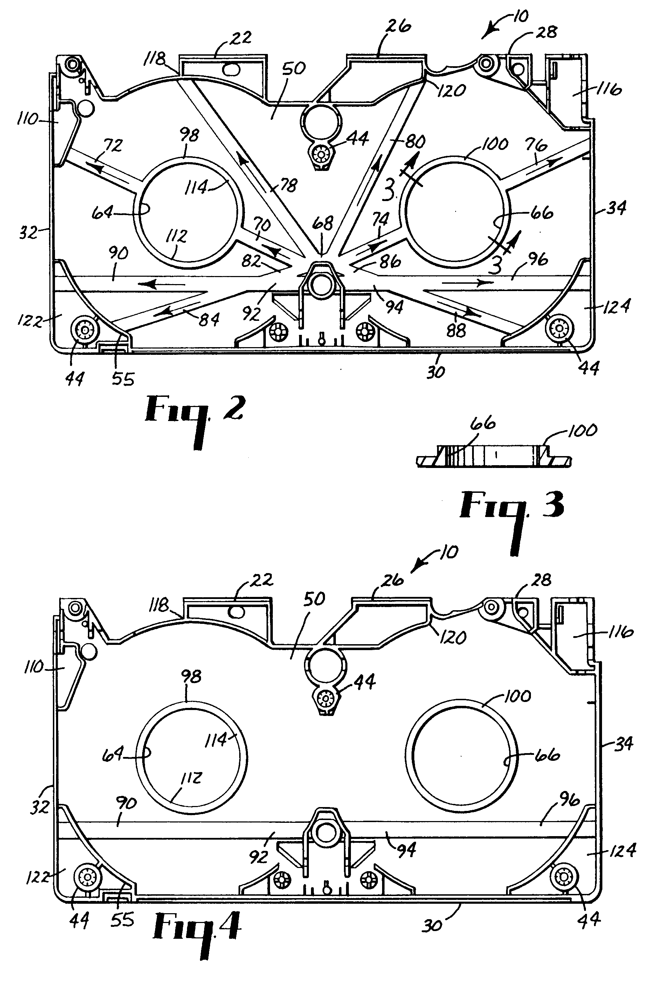

Figure 2 shows videocassette base 10 according to the present invention. Supply reel spindle access hole 64 and take-up reel spindle access hole 66 are provided in the bottom wall 50 to receive a drive spindle for the supply and take-up reels 18, 20. The cassette base 10 is produced by injection molding of a thermoplastic material in which a gate 68 for injecting the molding material is located on the bottom of the cassette base 10. Radial ribs extend from the gate 68 and include first rib 70, second rib 72, third rib 74, fourth rib 76, fifth rib 78, sixth rib 80, seventh rib 82, eighth rib 84, ninth rib 86, and tenth rib 88. An additional groove rib having parts 90, 92, 94, 96 covers the guide groove on the bottom wall 50 and connects with ribs 82, 84 and 86, 88. Raised bearing surfaces 98, 100 are formed around the supply reel spindle access hole 64 and the take-up reel spindle access hole 66, respectively. The ribs preferably run along straight lines, although they can curve.

Figure 2 shows the flow of molding material during injection from the gate 68, along the channels formed by the ribs 70-96 and bearing surfaces 98, 100. The ribs 70-88 are located in a generally radiating pattern from the gate 68 to act as flow channels to the peripheral areas of the base 10 having the most complexity and requiring the most molding material. This improves the pressure distribution in the mold during injection.

Four of the radiating ribs 70, 72, 74, 76 run along lines through the centers of spindle access holes 64, 66 forming two collinear rib pairs 70, 72 and 74, 76, which connect with the outer peripheries of the raised bearing surfaces 98, 100. The ribs 70, 72 lie along a line through the center of the supply reel spindle access hole 64, and connect to the raised annular bearing surface 98. Placing ribs along this line provides structural reinforcement to the region supporting the supply reel 18 while providing improved flow of molding material to the left front corner region 110 of the base 10. The flow of molding material to the left front corner region 110 is further improved by the raised bearing surface 98, which has the effect of inserting a wider portion into the flow channel, since the cross-sectional area of the channel is increased due to the presence of two alternative flow paths 112, 114. The first rib 70 extends from the gate 68 to the annular bearing surface 98 of the supply reel spindle access hole 64 and the second rib 72 extends from the annular bearing surface 98 to the left end 32 side wall at the left front corner region 110. Similarly, the ribs 74, 76 lie along a line through the center of the take-up reel spindle access hole 66, and connect to the raised annular bearing surface 100. Placing ribs along this line provides structural reinforcement to the region supporting the take-up reel 20 while providing improved flow of molding material to the right front corner region 116 of the base 10. The flow of molding material to the right front corner region 116 is further improved by the raised bearing surface 100, which has the effect of inserting a wider portion into the flow channel, since the cross-sectional area of the channel is increased due to the presence of two alternative flow paths 112, 114. The third rib 74 extends from the gate 68 to the annular bearing surface 100 of the take-up reel spindle access hole 66 and the fourth rib 76 extends from the annular bearing surface 100 to the right end 34 side wall at the right front corner region 116.

It is preferred that raised bearing surfaces 98, 100 be sufficiently high to provide a total wall thickness in the region of the access holes 64, 66 which approximates the wall thickness found in conventional videocassettes. In a typical case, this wall thickness is approximately 2 mm, (0.08 inches). It is preferred that the height of the ribs 70, 72, the bearing surface 98, the ribs 74, 76, and the bearing surface 100 be equal.

When the cassette is out of the VCR, the reels 18, 20 are free to move about within the confines of the enclosed region of the housing between the base 10 and the cover. The bearing surfaces 98, 100, illustrated in Figure 3 with reference to the bearing surface 100, must therefore be sufficiently wide to assure that the reels 18, 20 are always fully supported by the bearing surfaces 98, 100, even when the reels 18, 20 have moved to their most extreme positions. In a typical case, it has been found that a suitable width is approximately 1.90 mm (0.075 inches). It is preferred that the width of the ribs 70-88 be in the range of about 1.0 mm (0.04 inches), and that the width of the rib parts 90-96 be wider than the guide groove by a sufficient amount to provide an adequate flow area for injection molding material and an adequate wall thickness in the region along the groove in this area.

The rib 78 is located along a line running from the gate 68 to a region near the left attachment point 118 of the left bridge 22. Similarly, the rib 80 is located along a line running from the gate 68 to a region near the right attachment point 120 of the right bridge 26. The locations of the ribs 78, 80 are chosen to reinforce the base 10 while improving the supply, without excessive pressure loss, of molding material to the complex parts which make up the bridges 22, 26 and the parts between them.

The ribs 82, 84 are located to improve the flow of the molding material to the left rear corner region 122, while the ribs 86, 88 are located to improve the flow of molding material to the right rear corner region 124. As shown in Figure 2, the ribs 82, 84 and 86, 88 also enhance the supply of molding material to the guide groove rib parts 90-96 and that rib parts 90, 96 also provide flow paths to the left rear corner region 122 and the right rear corner region 124, respectively.

It has been found that this system of ribs allows the bottom wall thickness of the cassette base 10 to be reduced from the 2.0 mm (0.08 inches) typically found in conventional videocassettes to about 1.5 mm (0.06 inches), provided that the height of the ribs is about 0.5 mm (0.02 inches), and that the width of the ribs is about 1.0 mm (0.04 inches). This results in a significant reduction in both material consumption and cycle time.

While ribs 70-88 are portrayed as straight lines in Figure 2, it is not imperative that they be straight, provided that any curvature does not disrupt the generally unidirectional nature of the flow, and does not add significantly to the flow path length provided by the ribs. It is desirable to keep the number of ribs reinforcing the wall to a minimum, and to arrange them to avoid drastic changes in flow direction during injection molding. At the same time, the number and size of any ribs added must be sufficient to provide the desired results.

In an alternative embodiment, the supply reel and take-up reel spindle access holes 64, 66 have raised bearing surfaces 98, 100, respectively, but no radial ribs are used. This can improve molding with less material than if radial ribs are used.

Various changes and modifications may be made in the invention by one skilled in the art without departing from the scope or spirit of the invention. For example, although the invention has been described with respect to videocassettes, the invention has application with any cassette type formed by molding.

## Claims

1. A molded cassette base (10) having reduced wall thicknesses comprising:
- a base bottom wall (50) having a circular supply reel spindle access hole (64) and a circular take-up reel spindle access hole (66);
- two opposing base side walls (32,34) perpendicular to the lower wall (50);
- a base front wall (20) perpendicular to the lower wall (50) and the side walls (32,34), wherein the base front wall (28) and the base side walls (32,34) define front corner regions (110,116);
- a base rear wall (30) opposing the front wall (28) and perpendicular to the lower wall (50) and the side walls (32,34), wherein the base rear wall (30) and the base side walls (32,34) define rear corner regions (122,124);
- a gate (68) through which the material forming the base (10) is inserted into the mold; and
- a plurality of ribs (70) formed on the inside of the base (10), radiating from the gate (68) generally unidirectionally to the front corner regions (110,116).

2. The cassette base (10) of claim 1 further comprising a raised annular bearing surface (98) surrounding the supply reel spindle access hole (64) on the inner surface of the base lower wall (50) and a raised annular bearing surface (100) surrounding the take-up reel spindel access hole (66) on the inner surface of the base lower wall (50), wherein a first rib (70) extends from the gate (68) to the annular bearing surface of the supply reel spindel access hole (64) and a second rib (72) extends from the annular bearing surface of the supply reel spindle access hole (64) to the side wall (32) at the left front corner region (110), and wherein a third rib (74) extends from the gate (68) to the annular bearing surface of the take-up reel spindle access hole (66) and a fourth rib (76) extends from the annular bearing surface of the take-up reel spindle access hole (66) to the side wall (34) at the right front corner region (116).

3. The cassette base (10) of claim 2 wherein the first and second ribs (70,72) are colinear and extend along a line passing through the center of the supply reel spindle access hole (64), and wherein the third and fourth ribs (74,76) are colinear and extend along a line passing through the center of the take-up reel spindle access hole (66).

4. The cassette base (10) of any one of claims 1 to 3 further comprising an alignment groove on the outside of the base (10) adjacent and parallel to the base rear wall (30) and a groove rib (90,92,94,96) on the inside of the base opposite the alignment groove.

5. The cassette base (10) of any one of claims 1 to 4 further comprising left and right bridge areas (22,26) in the base front wall (28) and fifth and sixth ribs (78,80), wherein the fifth rib (78) extends from the gate (68) to the left bridge area (22) and the sixth rib (80) extends from the gate (68) to the right bridge area (26).

6. The cassette base (10) of claim 5 wherein the fifth rib (78) extends to the left side of the left bridge area (22) and the sixth rib (80) extends to the right side of the right bridge area (26).

7. The casette base (10) of any one of claims 1 to 6 further comprising seventh and eighth ribs (82,84) passing through the groove rib (90,92,94,96) with the seventh rib (82) extending from the gate (68) to the groove rib and the eigth rib extending from the groove rib (90,92,94,96) to the left rear corner region (122), wherein the groove rib (90,92,94,96) is segmented into a plurality of rib parts (90,92,94,96) by the seventh and eighth ribs (82,84).

8. The cassette base (10) of claim 7 wherein the seventh and eighth ribs (82,84) are colinear.

9. The cassette base (10) of any one of claims 1 to 8 further comprising ninth and tenth ribs (86,88) passing through the groove rib (90,92,94,96) with the ninth rib (86) extending from the gate (68) to the groove rib (90,92,94,96) and the tenth rib (88) extending from the groove rib (90,92,94,96) to the right rear corner region (124), wherein the groove rib (90,92,94,96) is segmented into a plurality of rib parts (90,92,94,96) by the ninth and tenth ribs (86,88).

10. The cassette base (10) of claim 9 wherein the ninth and tenth ribs (86,88) are colinear.

11. The cassette base (10) of any one of claims 1 to 10 wherein the videocassette is injection molded and formed of a thermoplastic material.

12. A molded cassette base (10) having reduced wall thicknesses comprising:
- a base bottom wall (50) having a circular supply reel spindle access hole (64) and a circular take-up reel spindel access hole (66);
- two opposing base side walls (32,34) perpendicular to the lower wall (50);
- a base front wall (28) perpendicular to the lower wall (50) and the side walls (32,34), wherein the base front wall (28) and the base side walls (32,34) define front corner regions (110,116);
- a base rear wall (30) opposing the front wall (28) and perpendicular to the lower wall (50) and the side walls (32,34);
- a gate (68) through which the material forming the base (10) is inserted into the mold; and
- a raised annular bearing surface (98) surrounding the supply reel spindel access hole (64) on the inner surface of the base lower wall (50) and a raised annular bearing surface (100) surrounding the take-up reel spindel access hole (100) on the inner surface of the base lower wall (50).
